# EUROPÄISCHE PATENTSCHRIFT

(11) **EP 3 299 105 B1**
(45) Veröffentlichungstag und Bekanntmachung des Hinweises auf die Patenterteilung: **01.07.2020**
(21) Anmeldenummer: 17191349.4
(22) Anmeldetag: 15.09.2017
(51) Int. Cl.: B23F 19/10

(54) **VERFAHREN ZUM ANFASEN DER ZAHNKANTEN VON KEGELRÄDERN**
METHOD FOR CHAMFERING THE TOOTH EDGES OF BEVEL GEARS
PROCÉDÉ DE CHANFREINAGE DES ROUES DENTÉES CONIQUES

(30) Priorität: 23.09.2016 DE 102016117962
(43) Veröffentlichungstag der Anmeldung: 28.03.2018
(73) Patentinhaber: Klingelnberg AG, 8050 Zürich (CH)
(72) Erfinder: Yoon, Ji Kyung, 42499 Hückeswagen (DE); Weber, Jürgen, 42499 Hückeswagen (DE); Ribbeck, Karl-Martin, 42897 Remscheid (DE)
(74) Vertreter: Heusch, Christian

(56) Entgegenhaltungen:
- EP-B1- 1 598 137
- DE-A1- 10 230 148
- DE-A1-102014 018 328
- JP-A- S6 451 223
- US-A1- 2013 022 424

## Beschreibung

Die Erfindung betrifft ein Verfahren zum Anfasen der Zahnkanten von Kegelrädern., das zum Beispiel aus dem Dokument EP 1 598 137 B bekannt ist, das ein Verfahren zum Anfasen von Zahnkanten eines Kegelrads in einer numerisch steuerbaren Kegelrad-Verzahnmaschine umfassend das Einsetzen eines Entgratwerkzeugs, um im Bereich der Zahnkanten Fasen zu erzeugen, offenbart.

### Stand der Technik

Beim Fertigen von Kegelrädern kann z.B. am äußeren Zahnende durch die spanabhebende Bearbeitung ein Grat (hier auch als Primärgrat bezeichnet) entstehen. Wegen der großen Verletzungsgefahr, aber auch wegen der Gefahr des Durchhärtens beim Härten der Kegelräder, werden diese Zahnkanten häufig im Rahmen eines Anfasens durch eine Fase gebrochen.

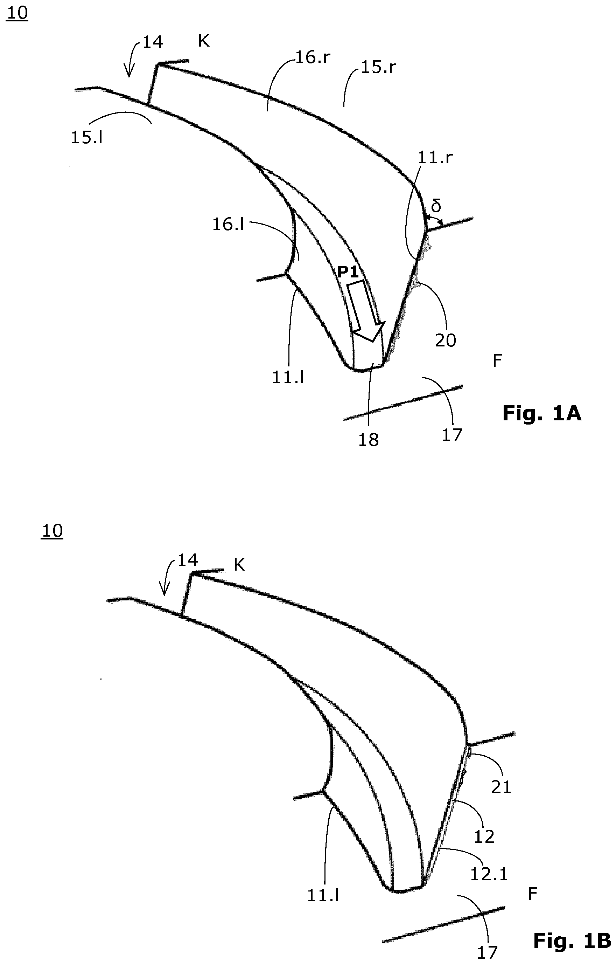

Bei dem beschriebenen Anfasen kann, je nach Konstellation, beim Entfernen des Primärgrats am Kegelrad ein Sekundärgrat entstehen. Falls das Primärentgraten mit einem Entgratwerkzeug erfolgt, dessen Schneid(en) aus einer Zahnlücke kommend nach außen geführt werden, so entsteht der Sekundärgrat am äußeren Umfang des Kegelrads, wie in Fig. 1A gezeigt. Falls hingegen das Entgratwerkzeug beim Primärentgraten vom Fuß zum Kopf des Kegelrads 10 (in eine Zahnlücke hinein) geführt wird, so entsteht der Sekundärgrat im Funktionsbereich des Kegelrads 10. In der Serienfertigung wird daher in den meisten Fällen das Primärentgraten von Innen nach Außen, wie in Fig. 1A durch den Blockpfeil P1 symbolisiert, durchgeführt.

Ein entsprechendes Beispiel ist in Fig. 1A gezeigt. Ein Primärgrat tritt hauptsächlich an der Zahnkante 11.r der konkaven Flanke auf, da diese Flanke mit der Rückenfläche 17 des Kegelradzahnes 10 in der Regel einen relativ spitzen Winkel δ bildet. Würde man an dieser Zahnkante 11.r nur den Primärgrat 20 entfernen (z.B. durch dein Einsatz einer Bürste), bliebe eine sehr scharfe Zahnkante 11.r stehen. Daher wird mindestens im Bereich der Zahnkante 11.r durch Anfasen eine Fase erzeugt.

In Fig. 1B ist anhand des Kegelrads 10 der Fig. 1A die Situation nach dem Anfasen der Zahnkante 11.r gezeigt. Man kann in Fig. 1B schematisch den Verlauf der ersten Fase 12 erkennen. Wie in Fig. 1B zu erkennen ist, kann sich entlang der ersten Fase 12 ein Sekundärgrat 21 bilden.

Sekundärgrat tritt jedoch nicht immer auf. Es zeigen sich hier Zusammenhänge z.B. mit der Qualität der Schneiden des Entgratwerkzeugs. Solange das Entgratwerkzeug scharfe Schneiden hat, verläuft das Primärentgraten relativ zuverlässig. Mit stumpfer werdenden Schneiden wird das Material des Kegelrads nicht mehr geschnitten sondern verdrängt. In diesem Fall steigt die Tendenz zur Bildung von Sekundärgrat. Da die Zahnkante zwischen Kegelradzähnen und z.B. dem Fuß des Kegelrads meist keinen geraden Verlauf hat, variiert die Dicke der beim Anfasen abzuhebenden Späne. Auch aus diesem Grund können teilweise Sekundärgrate entstehen.

Ein solcher Sekundärgrat 21 tritt nicht immer auf und er kann sich beispielsweise, wie in Fig. 1B angedeutet, auch nur in einem Teilbereich der ersten Fase 12 bilden.

Ein solcher Sekundärgrat 21 bringt mehrere Nachteile mit sich. Einerseits besteht aufgrund des Sekundärgrats 21 eine Verletzungsgefahr beim manuellen Handhaben eines solchen Kegelrads 10. Andererseits kann der Sekundärgrat 21 zu einer unerwünschten Verschmutzung der Härtevorrichtung führen, in welcher das Kegelrad 10 gehärtet wird. Dies ist vor allem dann von Nachteil, wenn das Härten in einer geschlossenen Härtevorrichtung durchgeführt wird, deren Innenraum möglichst von Verschmutzungen frei gehalten werden sollte. Falls die Zahnflanken im Rahmen einer Feinbearbeitung geschliffen werden sollen, so kann ein Sekundärgrat, der nicht entfernt wurde, das Schleifwerkzeug zerstören. Außerdem können Reste eines Sekundärgrats sich beim Einbau in einem Getriebe lösen und dort zu Problemen führen.

Sekundärgrat kann man z.B. durch den Einsatz von Nylon- oder Messingbürsten entfernen, wobei diese Werkzeuge jedoch einem Verschleiß unterliegen. Sie müssen daher von Zeit zu Zeit ausgewechselt werden. Um das Entstehen von Sekundärgrat zu vermeiden, könnte man auch die Schneiden der Entgratwerkzeuge des Öfteren nachschleifen, was aber auch mit einem Zeit- und Kostenaufwand verbunden ist, zumal man früh genug einschreiten muss, bevor sich Sekundärgrat überhaupt ansatzweise ausbilden kann.

Es gibt daher den Bedarf Kegelräder so anzufasen, dass sämtliche Grate zuverlässig und sicher entfernt werden. Speziell in der Serienherstellung von Kegelrädern - zum Beispiel im Automobilbau - müssen die Probleme, die sich im Zusammenhang mit Sekundärgrat ergeben, vermieden werden.

Von daher liegt der Erfindung die Aufgabe zugrunde, ein Verfahren zum Anfasen von Zahnkanten eines Kegelrads so auszugestalten, dass mit geringem Aufwand an verschiedenartigen Kegelrädern der Sekundärgrat zuverlässig entfernt werden kann.

Die Aufgaben werden erfindungsgemäss durch ein Verfahren gemäß Anspruch 1 gelöst. Vorteilhafte Ausgestaltungen der Erfindung bilden die Gegenstände der abhängigen Ansprüche.

Der Einsatz des 2-stufigen Verfahrens der Erfindung in einer Kegelrad-Verzahnmaschine ist besonders zuverlässig.

Die wesentlichen Vorteile der Erfindung bestehen darin, dass mit den mittels einer programmierbaren CNC Steuerung numerisch steuerbaren Achsen (NC-Achsen) nahezu beliebig geformte Profilkanten von Kegelrädern mit den Schneiden des Entgratwerkzeugs erreichbar sind. Somit kann auch bei einer gekrümmten Profilkante eine Doppelfacette erzeugt werden. Es lässt sich beim Anfasen im zweiten Durchgang die Bildung von Tertiärgrat vermeiden, da bei entsprechender steiler Neigung der Schneiden des Entgratwerkzeugs in Bezug auf das Kegelrad keine großen Werkstoffmengen abgetragen werden müssen, um entlang der vollen Zahnhöhe die schmale zweite Fase zu erzeugen. Ausserdem ist der Winkel, der sich zwischen der zweiten Fase und der Kegelstumpfmantelfläche an der Fußseite des Kegelrads bildet, deutlich weniger spitz als der Winkel der ursprünglich zwischen der Profilkanten und der Kegelstumpfmantelfläche bestand.

Es ist auch vorteilhaft, dass gemäss Erfindung das Anfasen oder Entgraten in einem kontinuierlichen Prozess erfolgt, was zu wesentlich kürzeren Bearbeitungszeiten führt als bei diskontinuierlichen Prozessen.

Die Erfindung lässt sich besonders vorteilhaft in einer 6-achsigen, CNC gesteuerten Kegelrad-Verzahnmaschine implementieren, die eine Entgratvorrichtung umfasst, der mindestens eine zusätzliche Achse zugeteilt ist. Vorzugsweise sind der Entgratvorrichtung bei allen Ausführungsformen mindestens eine Linearachse und eine Entgratspindelachse zugeordnet.

Der Entgratvorrichtung können bei allen Ausführungsformen auch eine Linearachse, eine Schwenkachse und eine Entgratspindelachse zugeordnet sein.

### ZEICHNUNGEN

Ausführungsbeispiele der Erfindung werden im Folgenden unter Bezugnahme auf die Zeichnungen näher beschrieben. Es zeigen:
- **FIG. 1A**: zeigt eine schematische Perspektivansicht eines beispielhaften Kegelrads, wobei eine einzelne Zahnlücke nach dem Verzahnen angedeutet ist, an deren Profilkante sich Primärgrat gebildet hat;
- **FIG. 1B**: zeigt eine schematische Perspektivansicht des Kegelrads der Fig. 1A, nachdem an der Profilkante eine erste Fase erzeugt wurde, wobei sich an der neu entstandenen Fasenkante im oberen Bereich Sekundärgrat gebildet hat;
- **FIG. 1C**: zeigt eine schematische Perspektivansicht des Kegelrads der Fig. 1A, nachdem im Bereich der ersten Fase eine zweite Fase erzeugt wurde;
- **FIG. 2**: zeigt eine schematische Perspektivansicht eines anderen Kegelrads, das eine Doppelfacette gemäß Erfindung aufweist;
- **FIG. 3**: zeigt eine perspektivische Teilansicht einer beispielhaften Verzahnmaschine, in der das Verfahren der vorliegenden Erfindung durchgeführt werden kann;
- **FIG. 4**: zeigt eine perspektivische Teilansicht einer weiteren beispielhaften Verzahnmaschine, in der das Verfahren der vorliegenden Erfindung durchgeführt werden kann;
- **FIG. 5**: zeigt eine schematische Ansicht einer beispielhaften Entgratvorrichtung, die vorteilhaft in dem Verfahren der Erfindung eingesetzt werden kann;
- **FIG. 6A**: zeigt eine schematische dreidimensionale Ansicht des ersten Durchgangs beim Anfasen gemäß Erfindung;
- **FIG. 6B**: zeigt eine schematische dreidimensionale Ansicht des zweiten Durchgangs beim Anfasen gemäß Erfindung.

### Detaillierte Beschreibung

In den Figuren 1A bis 1C ist eine schematische Perspektivansicht eines Kegelrads 10 gezeigt, wobei anhand dieser drei Figuren die wesentlichen Schritte der Erfindung erläutert werden. Anhand der Figuren 1A bis 1C werden auch die Elemente und Begriffe definiert, die hierin verwendet werden.

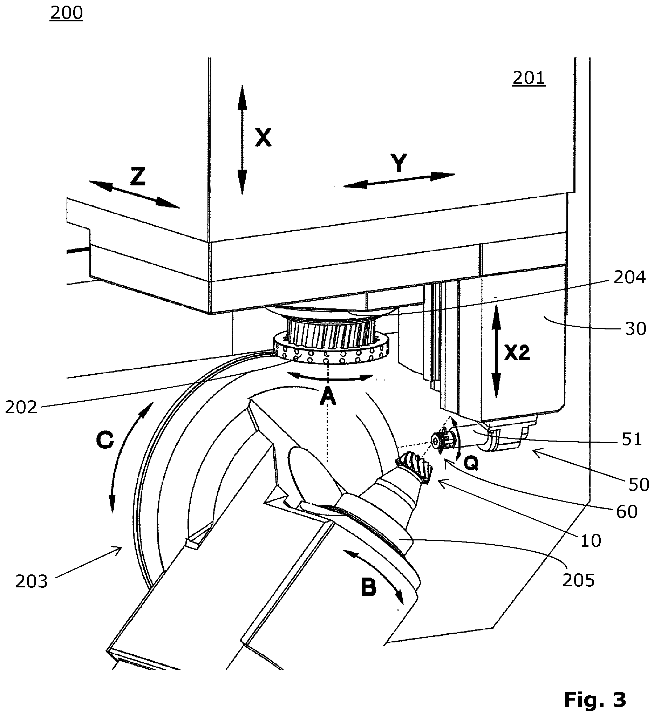

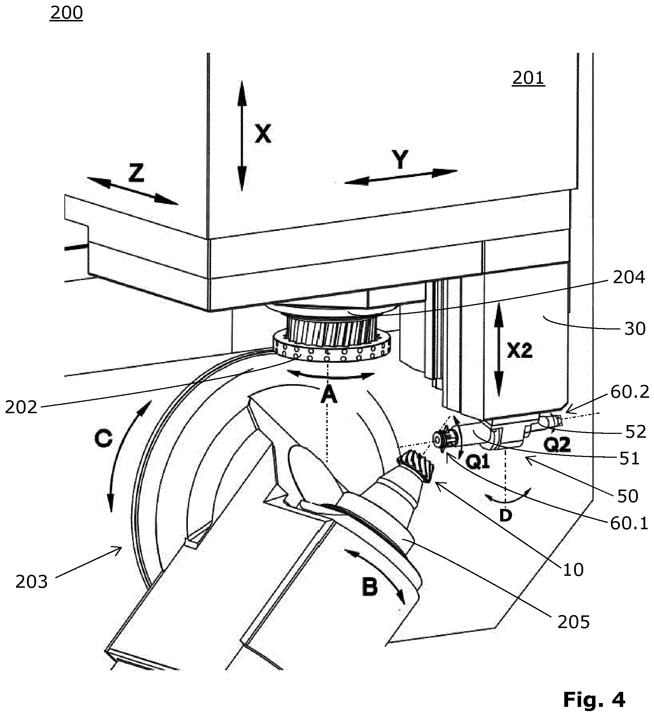

In den genannten Figuren ist in schematischer Form nur ein Teil des Grundkörpers eines Kegelradritzels 10 zu erkennen. Eine einzelne Zahnlücke 14 ist im Material des Grundkörpers angedeutet. Es handelt sich bei dem gezeigten Beispiel um ein Kegelrad 10 mit gebogener Flankenlängslinie, wie man an dem Verlauf der Zähne 15.r. und 15.l erkennen kann. Die Erfindung lässt sich aber auch auf andere Kegelräder 10 anwenden. Das Kegelradritzel 10 weist im gezeigten Beispiel einen Grundkörper auf, der durch zwei Kegelstümpfe mit entsprechenden Kegelmantelflächen definiert wird. Bei diesen Kegelmantelflächen handelt es sich, um genau zu sein, um Kegelstumpfmantelflächen. Die beiden Kegelstümpfe sind koaxial zur Werkstückspindelachse B angeordnet. Die Werkstückspindelachse B ist in den Figuren 3 und 4 zu erkennen.

Die Zähne 15.r. und 15.l des Kegelradritzels 10 verlaufen entlang der Kopfkegelstumpfmantelfläche. Die in den Figuren 1A - 1C mit dem Bezugszeichen 17 bezeichnete Kegelstumpfmantelfläche wird hier allgemein als (ringförmige) fersenseitige Mantelfläche 17 bezeichnet. Bei Kegelrädern werden auch die Begriff Kegelradkopf oder einfach Kopf K und Kegelradfuß bzw. Fuß F verwendet. Der Kopf K des Kegelrads 10 befindet sich in den Figuren 1A - 1C auf der linken Seite und der Fuß F befindet sich auf der Seite der Kegelstumpfmantelfläche 17.

Im Übergangsbereich von den Zähnen 15.r. und 15.l zu der Kegelstumpfmantelfläche 17, können bei der spanabhebenden Bearbeitung (hier als Verzahnen oder Verzahnungsbearbeitung bezeichnet) Primärgrate 20 entstehen (siehe Fig. 1A). Im Übergangsbereich der konkaven Zahnflanke 16.r zur Kegelstumpfmantelfläche 17 ergibt sich beim Verzahnen eine rechte Zahnkante 11.r (auch rechte Profilkante genannt) und im Übergangsbereich der konvexen Zahnflanke 16.l zur Kegelstumpfmantelfläche 17 ergibt sich beim Verzahnen eine linke Zahnkante 11.l (auch linke Profilkante genannt).

Die Primärgrate 20 bilden sich vor allem an den konkaven Zahnflanken 16.r , respektive im Übergangsbereich der konkaven Zahnflanken 16.r zur Kegelstumpfmantelfläche 17. Es ist jedoch anzumerken, das Primärgrate 20 sowohl an den Zahnflanken als auch am Zahnfuß 18 vorkommen können.

Ein Primärgrat 20 entsteht meist dann in genannten Bereich, wenn beim Verzahnen von innen nach außen gefräst wird, d.h. wenn ein Werkzeug vom Kopf K zum Fuß F durch die Zahnlücke 14 kommend im Bereich der Kegelstumpfmantelfläche 17 aus dieser Zahnlücke 14 austritt. In Fig. 1A ist in der Zahnlücke 14 ein Blockpfeil P1 eingezeichnet, der die Schnittrichtung eines Verzahnungswerkzeugs beim Austreten aus dieser Zahnlücke 14 andeutet.

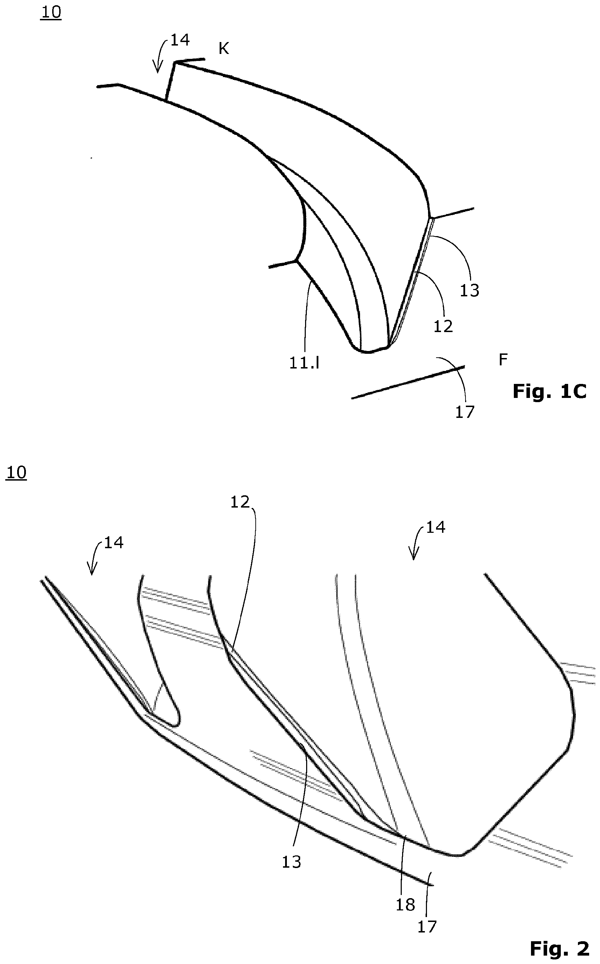

Um nun den Primärgrat 20 entfernen zu können, wird das Kegelrad 10 in einer Kegelrad-Verzahnmaschine 200 (siehe beispielweise Fig. 3 oder 4) angefast. Das Anfasen umfasst gemäß Erfindung zwei Durchgänge, wie folgt:
- Bei einem ersten Durchgang werden durch den Einsatz eines ersten Entgratwerkzeugs 60 oder 60.1 in einem kontinuierlichen Vorgang erste Fasen 12 an den Zahnkanten 11.r und/oder 11.l bereitgestellt, wie in Fig. 1B beispielhaft und schematisch gezeigt. Ein kontinuierlichen Vorgang ist im Sinne der Erfindung ein Vorgang, bei dem sich das Kegelrad 10 und das erste Entgratwerkzeug 60, 60.1 gekoppelt im Eingriff miteinander drehen. Das Kegelrad 10 dreht sich dabei um die Werkstückspindelachse B und das Entgratwerkzeug 60 oder 60.1 um die Entgratspindelachse Q.
- Bei einem zweiten Durchgang werden durch Einsatz des ersten Entgratwerkzeugs 60 oder 60.1, oder durch den Einsatz eines zweiten Entgratwerkzeugs 60.2 in einem kontinuierlichen Vorgang zweite Fasen 13 im Bereich der ersten Fasen 12 bereitgestellt, wie in Fig. 1C beispielhaft und schematisch gezeigt.

Vorzugsweise bildet die erste Fase 12 bei allen Ausführungsformen zusammen mit den zweiten Fase 13 eine Doppelfacette, deren einzelnen Fasen 12 und 13 sich im Wesentlichen parallel zueinander erstrecken, wie in Fig. 1C zu erkennen ist.

In Fig. 2 sind zwei benachbarte Zahnlücken 14 eines Kegelrads 10 der Erfindung gezeigt. Die Kegelstumpfmantelfläche 17 des Kegelrad-Werkstücks 10 wurde mit einem Drehmeißel bearbeitet. Die entsprechenden Bearbeitungspuren sind in Fig. 2 durch eine Schraffur angedeutet, um so das Material der Zähne besser von den Zahnlücken 14 unterscheiden zu können. Anhand des in Fig. 2 gezeigten Beispiels eines anderen Kegelrades 10 ist zu erkennen, dass die einzelnen Fasen 12 und 13 der Doppelfacette zum Teil auch einen leicht gekrümmten Verlauf haben können, was letztendlich der Flankenform und der Krümmung der Kegelstumpfmantelfläche 17 geschuldet ist.

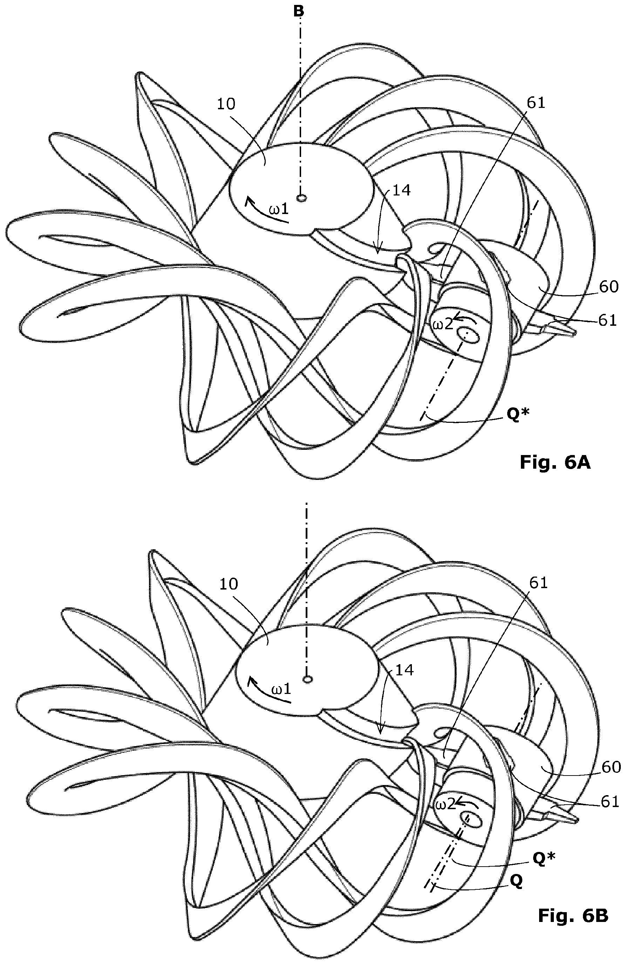

Um im zweiten Durchgang eine zweite Fase 13 entlang der entstandenen Fasenkante 12.1 (siehe Fig. 1B) erzeugen zu können, wird das Entgratwerkzeug 60, 60.1, 60.2 im Rahmen des zweiten Durchgangs steiler in Bezug zu den zu entgratenden Zahnkanten des Kegelrad 10 angestellt als im Rahmen des ersten Durchgangs. Details hierzu sind den schematischen Abbildungen der Figuren 6A und 6B zu entnehmen.

Fig. 3 zeigt in perspektivischer Darstellung den Grundaufbau einer ersten CNC-Verzahnmaschine 200 zum Herstellen von bogenverzahnten Kegelrädern 10. Eine solche Maschine 200 kann ausgelegt oder umgerüstet werden, um ein Entgraten oder Anfasen des Kegelrades 10 mittels einer speziellen Entgratvorrichtung 50 vorzunehmen. Das Verfahren der Erfindung lässt sich jedoch auch auf anderen CNC-Verzahnmaschine 200 anwenden und es können andere als die gezeigten speziellen Entgratvorrichtung 50 zum Einsatz kommen.

Die CNC-Verzahnmaschine 200 kann wie folgt aufgebaut sein. Die Maschine 200 kann ein Maschinengehäuse 201 umfassen, das es ermöglicht eine Werkzeugspindel 204 entlang einer Koordinatenachse X (1. Achse) vertikal und linear, entlang einer Koordinatenachse Y (2. Achse) horizontal und linear sowie entlang einer Koordinatenachse Z (3. Achse) horizontal und linear zu führen. Die genannte Werkzeugspindel 204 kann hängend an der Maschine 200 angeordnet sein, wobei die entsprechende Werkzeugspindelachse A (4. Achse) vertikal im Raum hängt. Die Werkzeugspindel 204 trägt ein Werkzeug, hier beispielshalber einen Messerkopf 202 mit mehreren Stabmessern.

An der Maschine 200 kann eine erste Schwenkvorrichtung 203 vorgesehen sein, die eine Werkstückspindel 205 mit einer Werkstückspindelachse B (5. Achse) trägt. Die Werkstückspindel 205 samt Werkstückspindelachse B kann um eine Schwenkachse (C-Achse; 6. Achse) der ersten Schwenkvorrichtung 203 geschwenkt werden. Die Schwenkachse C steht senkrecht zur Werkzeugspindelachse A und verläuft hier horizontal im Raum. Wenn man von vorne in Richtung der Schwenkachse C auf die Maschine 200 der Fig. 3 schaut, steht die Werkstückspindel 205 in dem gezeigten Moment schräg in einer 14 Uhr-Stellung. In dieser Stellung kann ein Entgratwerkzeug 60 mit dem Kegelrad-Werkstück 10 in Wechselwirkung gebracht werden.

Die Werkstückspindel 205 trägt im gezeigten Beispiel ein bogenverzahntes Kegelradritzel als Werkstück 10. Die erste Schwenkvorrichtung 203 ist so um die C- Achse schwenkbar, dass das Werkstück 10 in eine Bearbeitungsposition unterhalb des Verzahnwerkzeugs 202 schwenkbar ist. Ausserdem kann das Werkstück 10 durch die erste Schwenkvorrichtung 203 zum Entgraten in die in Fig. 3 gezeigte Stellung überführt werden.

Ausserdem ist zum Beispiel eine Entgratvorrichtung 50 mit Zustellvorrichtung(en) vorgesehen, um gemäss Erfindung das Entgratwerkzeug 60 relativ zum Kegelrad-Werkstück 10 bewegen und miteinander in Wechselwirkung bringen zu können.

Die Entgratvorrichtung 50 (die z.B. einen Entgratmesserkopf 60.1 als Entgratwerkzeug 60 umfassen kann) kann z.B. eine Linearachse X2 (7. Achse) und eine Entgratspindelachse Q (8. Achse) umfassen, wie in Fig. 3 gezeigt.

Unter Einsatz einer oder mehrerer der genannten Achsen, kann das Entgratwerkzeug 60 relativ zum Kegelrad-Werkstück 10 in eine für das Entgraten geeignete Ausgangsposition gebracht werden.

Dann werden das Werkstück 10 um die Werkstückspindelachse B und das Entgratwerkzeug 60 um die Entgratspindelachse Q gekoppelt drehangetrieben und relativ zueinander bewegt. In einem kontinuierlichen Verfahren führen die Schneiden des Entgratwerkzeugs 60 (z.B. die Schneiden der Entgratmesser des Entgratmesserkopfes 60.1) an den vorbestimmten Kanten 11.r und/oder 11.l des Kegelrads 10 entsprechende Anfasbewegungen aus. Im Rahmen dieses Vorgangs, der als erster Durchgang bezeichnet wird, werden die ersten Fasen 12 erzeugt. Das Ergebnis dieses ersten Durchgangs ist in Fig 1B beispielhaft gezeigt, wobei hier nur an der rechten Kante 11.r eine erste Fase 12 erzeugt wurde.

Im Rahmen eines zweiten Durchgangs, der bei allen Ausführungsformen auf derselben Maschine 200 durchgeführt wird, wird im Bereich der ersten Fase 12 eine zweite Fase 13 erzeugt. Das erfolgt entweder mit demselben Entgratwerkzeug 60 (z.B. dem Entgratmesserkopf 60.1) oder mit einem anderen (zweiten) Entgratmesserkopf 60.2. Das Ergebnis dieses zweiten Durchgangs ist in Fig. 1C beispielhaft gezeigt, wobei auch hier nur im Bereich der ehemaligen rechten Kante 11.r eine zweite Fase 13 erzeugt wurde.

Wie bereits erwähnt, kann bei dem zweiten Durchgang ein anderes Entgratwerkzeug 60 zum Einsatz kommt als beim ersten Durchgang. Beim ersten Durchgang kann z.B. ein Entgratwerkzeug 60.1 und beim zweiten Durchgang z.B. ein Entgratwerkzeug 60.2 zum Einsatz gebracht werden.

Um das erfindungsgemässe Anfasen/Entgraten im kontinuierlichen Verfahren realisieren zu können, werden Kegelrad-Verzahnmaschinen 200 mit mindestens sechs numerisch gesteuerten Achsen, wie in den Figuren 3 und 4 gezeigt, bevorzugt.

Es können jedoch auch andere CNC-Kegelrad-Verzahnmaschinen 200 umgerüstet oder ausgestattet werden, wobei Maschinen mit sieben oder acht numerisch gesteuerten Achsen bevorzugt sind, wie bereits anhand der Fig. 3 erläutert wurde.

Im Folgenden wird einer weitere Kegelrad-Verzahnmaschine 200 unter Bezugnahme auf die Fig. 4 beschrieben. Die Kegelrad-Verzahnmaschine 200 der Fig. 4 ist ähnlich aufgebaut wie die Maschine 200 der Fig. 3. Die Maschine 200 weist eine Werkstückspindel 205 auf, welche das zu bearbeitende Kegelrad 10 koaxial zur Werkstückspindelachse B aufnimmt. Die Werkstückspindel 205 sitzt auf einer Schwenkvorrichtung 203, die um die Schwenkachse C schwenkbar gelagert ist. Oberhalb des Kegelrads 10 ist das Verzahnwerkzeug 202 (hier ein Messerkopf mit Stabmessern) an einer Werkzeugspindel 204 um eine Werkzeugspindelachse A drehbar gelagert. Die Werkzeugspindel 204 samt Verzahnwerkzeug 202 sitzt hier in einer hängenden Konstellation an einem Maschinenständer, dessen Gehäuse mit dem Bezugszeichen 201 versehen ist. Der Maschinenständer ist mit drei Linearachsen X, Y und Z ausgestattet, wie in Fig. 3 und 4 gezeigt. Die Kegelrad-Verzahnmaschine 200 weist somit sechs numerisch gesteuerte Achsen A, B, C, X, Y und Z auf.

Es ist an dem Maschinenständer und/oder dem Gehäuse 201 ein Schlitten 30 mit einer Entgratvorrichtung 50 vorgesehen. Der Schlitten 30 ermöglicht eine lineare Verschiebung der Entgratvorrichtung 50 relativ zum Kegelrad 10. Die entsprechende Linearachse wird hier als X2-Achse bezeichnet und verläuft beispielweise parallel zur X-Achse.

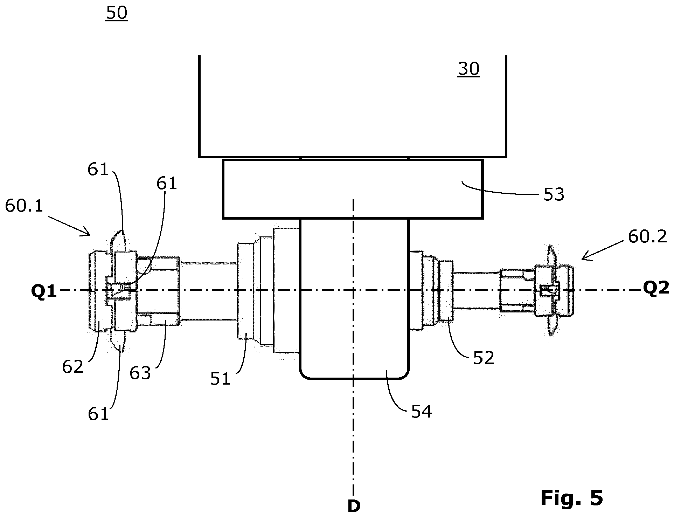

Die Entgratvorrichtung 50 umfasst vorzugsweise bei allen Ausführungsformen eine Entgratspindel 51 mit der bereits erwähnten Entgratspindelachse Q, die hier im gezeigten Beispiel eine horizontale Orientierung hat. An der Entgratspindel 51 kann ein Entgratwerkzeug 60 befestigt sein, das als erstes Entgratwerkzeug 60.1 bezeichnet wird, wie in Fig. 3 gezeigt. Bei dem in Fig. 3 gezeigten Entgratwerkzeug 60 handelt es sich konkret um einen Entgratmesserkopf 60.1, der mit Messereinsätzen (z.B. in Form von Stabmessern) so bestückt ist, dass diese radial aus dem Umfang des Entgratwerkzeugs 60.1 heraus ragen. Details eines entsprechenden Entgratwerkzeugs 60.1 sind in Fig. 5 links gezeigt.

An der Entgratspindel 51 können aber auch zwei Entgratwerkzeuge 60.1 und 60.2 befestigt sein, wie in Fig. 4 gezeigt.

Vorzugsweise handelt es sich bei den beiden Achsen X2 und Q, die der Entgratvorrichtung 50 zugeordnet sind, um CN-gesteuerte Zusatzachsen. Die Kegelrad-Verzahnmaschine 200 weist bei der in Fig. 3 gezeigten Konstellation somit insgesamt 8 numerisch gesteuerte Achsen A, B, C, X, Y, Z, X2 und Q auf. Bei der in Fig. 4 gezeigten Konstellation, weist die Maschine 200 insgesamt 9 numerisch gesteuerte Achsen A, B, C, X, Y, Z, X2, Q2 und D auf, wobei es sich bei der D-Achse um eine Schwenkachse der Entgratvorrichtung 50 handelt.

Numerisch steuerbare Achsen sind in diesem Zusammenhang Achsen, die über eine programmierbare Steuerung ansteuerbar sind. Die numerisch steuerbaren Achsen sind so ausgebildet und angeordnet, dass durch das Verstellen mindestens einer der Achsen die Werkstückspindel 205 samt des Kegelrads 10 relativ zu dem Entgratwerkzeug 60 so bewegbar ist, dass Schneiden des Entgratwerkzeugs 60 bei gleichzeitigem gekoppeltem Rotieren der Werkstückspindel 205 um die Werkstückspindelachse B und des Entgratwerkzeugs 60 um die Entgratspindelachse Q (in Fig. 3) nacheinander in Zahnzwischenräume 14 benachbarter Zähne 15.r, 15.l des Kegelrads 10 eintauchen und eine Anfas- oder Entgratungsbewegung in Bezug auf die vorgegebenen Zahnkanten 11.r, 11.l und Fasenkanten 12.1 des Kegelrads 10 ausführen.

Wie in Fig. 3 angedeutet, kann die Entgratspindelachse Q des Entgratwerkzeugs 60 zum Beispiel parallel zur Y-Achse verlaufen. Es sind aber andere Achskonstellationen möglich.

Insgesamt weist die Kegelrad-Verzahnmaschine 200 vorzugsweise also acht oder neu numerisch gesteuerte Achsen auf. Es können aber auch Kegelrad-Verzahnmaschine 200 mit einer anderen Anzahl Achsen eingesetzt werden, wobei mindestens sechs numerisch gesteuerten Achsen (für das kontinuierlich arbeitende Entgratverfahren mit zwei Durchgängen) vorhanden sein müssen.

Gemäss Erfindung kommen vorzugsweise eine oder mehrere der numerisch gesteuerten Achsen zum Einsatz, um die Schneiden des Entgratwerkzeugs 60 relativ zu dem Werkstück 10 zu bewegen. Vor dem Durchführen des zweiten Durchgangs des erfindungsgemäßen Verfahrens wird die Maschineneinstellung der Kegelrad-Verzahnmaschine 200 so verändert, dass die Schneiden des Entgratwerkzeugs 60 relativ zu den betroffenen Kanten des Werkstücks 10 steiler stehen als im Rahmen des ersten Durchgangs.

Details hierzu sind den schematischen 3-dimensionalen Darstellungen der Figuren 6A und 6B zu entnehmen. In Fig. 6A ist das Kegelradwerkstück 10 mit nur einer Zahnlücke 14 gezeigt. Da sich das Kegelradwerkstück 10 mit der Winkelgeschwindigkeit ω1 um die Werkstückachse B und das Entgratwerkzeug 60 mit der Winkelgeschwindigkeit ω2 um die Entgratspindelachse Q (hier mit Q* bezeichnet) dreht und da die beiden Drehbewegungen gekoppelt erfolgen, ergeben sich für die Messer 61 des Entgratwerkzeug 60 schraubenförmige Flugbahnen im 3-dimensionalen Raum. In Fig. 6A ist lediglich die Flugbahn desjenigen Messers 61 gezeigt, die im gezeigten Moment eine erste Fase 12 an einer konkaven Flanke der Zahnlücke 14 erzeugt (die Fase 12 ist nicht in Fig. 6A erkennbar).

In Fig. 6B ist in einer entsprechenden Darstellung der zweite Durchgang gezeigt, wobei in diesem zweiten Durchgang an der ersten Fase 12 eine zweite Fase 13 erzeugt wird, wie zuvor bereits beschrieben (die Fase 13 ist nicht in Fig. 6B erkennbar).

Die Darstellungen der Figuren 6A und 6B zeigen das stillstehende Kegelradwerkstück 10, d.h. die Drehung des Kegelradwerkstück 10 wurde in eine Drehung des Entgratwerkzeugs 60 um das Kegelradwerkstück 10 umgerechnet.

Wenn man die Flugbahnen der Figuren 6A und 6B im 3-dimensionalen Raum miteinander vergleicht, dann ist zu erkennen, dass in Fig. 6B das Entgratwerkzeug 60 etwas steiler entlang der zu entgratenden Kante geführt wird als in Fig. 6A. Um die Veränderung der Maschineneinstellung zwischen dem ersten Durchgang und dem zweite Durchgang besser veranschaulichen zu können, sind in Fig. 6B sowohl die Lage der Entgratspindelachse Q* des ersten Durchgangs als auch die Lage der Entgratspindelachse Q des zweiten Durchgangs gezeigt.

Die Abbildungen der Figuren 6A und 6B sind rein schematischer Natur und sind derart vereinfacht worden, dass man das Verändern der Maschineneinstellung sichtbar machen kann.

Die Maschine 200 der Fig. 4 weist eine Entgratvorrichtung 50 auf, die zwei Entgratspindeln 51, 52 und zwei Entgratwerkzeuge 60.1 und 60.2 umfasst. Die beiden Entgratspindeln 51, 52 und die beiden daran befestigten Entgratwerkzeuge 60.1 und 60.2 sind koaxial angeordnet. Das Entgratwerkzeug 60.1 kann um die Entgratspindelachse Q1 und das Entgratwerkzeug 60.2 kann um die Entgratspindelachse Q2 drehangetrieben werden. In der in Fig. 4 gezeigten Schwenkstellung der Entgratvorrichtung 50, kann das Entgratwerkzeug 60.1 mit dem Kegelrad 10 zum Durchführen des ersten Engrat- oder Anfasvorgangs in Kontakt gebracht werden. Um das zweite Entgratwerkzeug 60.2 mit dem Kegelrad 10 in Kontakt bringen zu können, wird die Entgratvorrichtung 50 um die Vertikalachse D geschwenkt.

Die Kegelrad-Verzahnmaschine 200 der Fig. 4 kann beispielsweise mit einer Entgratvorrichtung 50 ausgestattet, wie sie in Fig. 5 beispielhaft im Detail gezeigt ist. In Fig. 5 ist ein unterer Bereich des Schlittens 30 zu erkennen. Unterhalb des Schlittens 30 sitzen hier eine Schwenkvorrichtung 53 und eine Antriebseinheit 54, die relativ zu der Schwenkvorrichtung 53 um die Vertikalachse D geschwenkt werden kann. Bei der in Fig. 5 gezeigten 1. Stellung, zeigen das erste Entgratwerkzeug 60.1 samt erster Entgratspindel 51 nach links und das zweite Entgratwerkzeug 60.2 samt zweiter Entgratspindel 52 nach rechts. In Fig. 5 ist gut zu erkennen, dass die beiden Entgratspindeln 51, 52 und die beiden daran befestigten Entgratwerkzeuge 60.1 und 60.2 koaxial angeordnet sind. Die Entgratspindelachsen Q1 und Q2 bilden eine gemeinsame Achse. Die Drehbewegung des ersten Entgratwerkzeugs 60.1 samt der ersten Entgratspindel und des zweiten Entgratwerkzeugs 60.2 samt der zweiten Entgratspindel 52 können miteinander gekoppelt sein (z.B. indem nur ein Drehantrieb in der Antriebseinheit 54 vorgesehen ist). Die Antriebseinheit 54 kann aber auch zwei separate Drehantriebe umfassen.

Jeder Entgratmesserkopf 60, 60.1, 60.2 kann nach dem folgenden Prinzip aufgebaut sein, wobei die folgenden Angaben lediglich als Beispiel zu verstehen sind. Dieses Prinzip wird anhand des in Fig. 5 links gezeigten Entgratmesserkopfs 60.1 erläutert.

Das Beispiel eines geeigneten Entgratfräsers ist dem erteilten Europäischen Patent EP1598137 B1 zu entnehmen.

Der Entgratmesserkopf 60.1 kann über eine Platte 62 und Schrauben (nicht gezeigt) an der Entgratspindel 51 verschraubt sein. Es ist ein Grundhalter 63 vorgesehen, der verschiedenen Elemente zur Aufnahme von Messereinsätzen 61 (z.B. in Form von stabförmigen Entgratmessern) aufweist. In Fig. 5 sind drei Messereinsätze 61 sichtbar. Der Entgratmesserkopf 60.1 kann mehrere Messereinsätze 61 aufweisen, die in Ausnehmungen des Entgratmesserkopfs 60.1 einsetzbar sind, wobei die Messereinsätze 61 im Wesentlichen radial zu der Entgratspindelachse Q, Q1, Q2 gerichtet sind. Jeder der Messereinsätze 61 weist mindestens eine Schneide zum Anfasen und/oder Entgraten des Werkstücks 10 auf. Statt den Ausnehmungen am Entgratmesserkopf 60.1, können auch andere Befestigungsmittel zum Festklemmen oder Befestigen der Messereinsätze 61 vorgesehen sein.

Der Entgratmesserkopf 60.2 kann bei allen Ausführungsformen ähnlich oder genauso aufgebaut sein wie der Entgratmesserkopf 60.1. In Fig. 5 ist zu erkennen, dass der zweite Entgratmesserkopf 60.2 vorzugsweise kleiner ist als der erste Entgratmesserkopf 60.1. Dies liegt einerseits daran, dass die Schneiden der Messereinsätze 61 des zweiten Entgratmesserkopfs 60.2 nur kürzere zweite Fasen 13 schneiden müssen als die Schneiden der Messereinsätze 61 des ersten Entgratmesserkopfs 60.1. Ausserdem muss der zweite Entgratmesserkopf 60.2 vorzugsweise steiler angestellt werden, um die zweite Fasen 13 schneiden zu können. Um eine Kollision mit dem Werkstück 10 zu vermeiden, sollte der zweite Entgratmesserkopf 60.2 daher weniger auslandend sein als der erste Entgratmesserkopf 60.1.

Gemäss Erfindung können bei allen Ausführungsformen Messereinsätze 61 entweder aus Hartmetall, aus Werkzeugstahl oder aus Schneidkeramik eingesetzt werden. Dies ist ein wesentlicher Unterschied zu herkömmlichen Entgratfräsern. In einer bevorzugten Ausführungsform wird micro-grain Hartmetall verwendet, weil dann die Scheiden der Messereinsätze 61 lange scharf bleiben und sauber schneiden.

Es entstehen für das Entgraten auf der Verzahnmaschine in zwei Durchgängen keine nennenswerten Zeitverluste, da durch die Verwendung spezieller Messereinsätze 61 im kontinuierlichen Verfahren mit relativ hohen Schnittgeschwindigkeiten gearbeitet werden kann.

### Bezugszeichen:

| | |
|---|---|
| Kegelrad / Werkstück | 10 |
| Zahnkanten / Profilkanten | 11 |
| rechte Zahnkante / rechte Profilkante | 11.r |
| linke Zahnkante / linke Profilkante | 11.l |
| erste Fasen | 12 |
| Fasenkante | 12.1 |
| zweite Fasen | 13 |
| Zahnlücke | 14 |
| rechter Zahn | 15.r |
| linker Zahn | 15.l |
| konkave Zahnflanke | 16.r |
| konvexe Zahnflanke | 16.l |
| Kegelstumpfmantelfläche | 17 |
| Zahnfuß | 18 |
| | |
| Primärgrate | 20 |
| Sekundärgrate | 21 |
| | |
| Schlitten | 30 |
| | |
| Entgratvorrichtung | 50 |
| Entgratspindel | 51 |
| Entgratspindel | 52 |
| Schwenkvorrichtung | 53 |
| Antriebseinheit | 54 |
| | |
| Entgratmesserkopf / Entgratwerkzeug | 60 |
| Erster Entgratmesserkopf / erstes Entqratwerkzeug | 60.1 |
| zweiter Entgratmesserkopf / zweites Entgratwerkzeug | 60.2 |
| Messereinsätze | 61 |
| Platte | 62 |
| Grundhalter | 63 |
| | |
| Kegelrad-Verzahnmaschine / CNC-Verzahnmaschine | 200 |
| Maschinengehäuse | 201 |
| Verzahnwerkzeug | 202 |
| Schwenkvorrichtung | 203 |
| Werkzeugspindel | 204 |
| Werkstückspindel | 205 |
| | |
| Werkzeugspindelachse | A |
| Werkstückspindelachse | B |
| Schwenkachse | C |
| Vertikalachse / Schwenkachse | D |
| Winkel | δ |
| Kegelradfuß | F |
| Kegelradkopf | K |
| Schnittrichtung | P1 |
| Entgratspindelachse | Q |
| Entgratspindelachsen | Q1, Q2 |
| Winkelgeschwindigkeit des Werkstücks | ω1 |
| Winkelgeschwindigkeit des Abrichters | ω2 |
| Koordinatenachse / Linearachse | X |
| Koordinatenachse / Linearachse | X2 |
| Koordinatenachse / Linearachse | Y |
| Koordinatenachse / Linearachse | Z |

## Patentansprüche

1. Verfahren zum Anfasen von Zahnkanten (11) eines Kegelrads (10) in einer numerisch steuerbaren Kegelrad-Verzahnmaschine (200) umfassend die folgenden Schritte:
- Einsetzen eines Entgratwerkzeugs (60, 60.1, 60.2) in einem ersten Durchgang, um im Bereich der Zahnkanten (11) erste Fasen (12) zu erzeugen,
- Einsetzen eines Entgratwerkzeugs (60, 60.1, 60.2) in einem zweiten Durchgang, um im Bereich der erste Fasen (12) zweite Fasen (13) zu erzeugen,
wobei die ersten Fasen (12) zusammen mit den zweiten Fasen (13) Doppelfacetten bilden, die sich im Wesentlichen parallel zueinander erstrecken.

2. Verfahren nach Anspruch 1, **dadurch gekennzeichnet, dass** es sich sowohl bei dem ersten Durchgang als auch bei dem zweiten Durchgang um einen kontinuierlichen Bearbeitungsvorgang handelt, bei dem sich das Kegelrad (10) und das Entgratwerkzeug (60, 60.1, 60.2) gekoppelt im Eingriff miteinander drehen.

3. Verfahren nach Anspruch 1 oder 2, **dadurch gekennzeichnet, dass** das Entgratwerkzeug (60, 60.1, 60.2) im Rahmen des ersten Durchgangs in Bezug zum Kegelrad (10) weniger steil angestellt ist als im Rahmen des zweiten Durchgangs.

4. Verfahren nach Anspruch 1, 2 oder 3, **dadurch gekennzeichnet, dass** es sich bei dem Entgratwerkzeug (60, 60.1, 60.2) um einen Entgratmesserkopf (60, 60.1, 60.2) handelt, der mit mehreren stabartigen Messereinsätzen (61) ausgestattet ist.

5. Verfahren nach einem der Ansprüche 1 bis 4, **dadurch gekennzeichnet, dass** im Rahmen des ersten Durchgangs Schneidkanten des Entgratwerkzeugs (60, 60.1, 60.2) vom Kopf des Kegelrads (10) zum Fuß des Kegelrads (10) durch Zahnlücken (14) des Kegelrads (10) hindurch nach aussen geführt werden, um im Bereich der Zahnkanten (11) die ersten Fasen (12) zu erzeugen.

6. Verfahren nach Anspruch 5, **dadurch gekennzeichnet, dass** im Rahmen des zweiten Durchgangs Schneidkanten des Entgratwerkzeugs (60, 60.1, 60.2) vom Kopf des Kegelrads (10) zum Fuß des Kegelrads (10) durch Zahnlücken (14) des Kegelrads (10) hindurch nach aussen geführt werden, um im Bereich der erste Fasen (12) die zweite Fasen (13) zu erzeugen.

7. Verfahren nach einem der Ansprüche 1 bis 6, **dadurch gekennzeichnet, dass** bei dem zweiten Durchgang ein anderes Entgratwerkzeug (60.2) zum Einsatz kommt als beim ersten Durchgang.

8. Verfahren nach einem der Ansprüche 1 bis 6, **dadurch gekennzeichnet, dass** die Kegelrad-Verzahnmaschine (200) eine Entgratvorrichtung (50) mit zwei Entgratwerkzeugen (60, 60.1, 60.2) umfasst, wobei die Entgratvorrichtung (50) vor dem zweiten Durchgang eine Dreh- oder Schwenkbewegung durchführt, um beim zweiten Durchgang ein anderes Entgratwerkzeug zum Einsatz zu bringen als beim ersten Durchgang.

## Claims

1. Method for chamfering tooth edges (11) of a bevel gear (10) in a numerically-controllable bevel gear cutting machine (200) comprising the following steps:
- employing a deburring tool (60, 60.1, 60.2) in a first pass to create first chamfers (12) in the region of the tooth edges (11),
- employing a deburring tool (60, 60.1, 60.2) in a second pass to create second chamfers (13) in the region of the first chamfers (12),
wherein the first chamfers (12) together with the second chamfers (13) form double facets, which extend substantially in parallel to one another.

2. The method according to claim 1, **characterized in that** both the first pass and also the second pass is a continuous machining procedure, in which the bevel gear (10) and the deburring tool (60, 60.1, 60.2) rotate in a coupled manner while engaged with one another.

3. The method according to claim 1, **characterized in that** the deburring tool (60, 60.1, 60.2) is set less steeply in relation to the bevel gear (10) in the scope of the first pass than in the scope of the second pass.

4. The method according to claim 1, 2, or 3, **characterized in that** the deburring tool (60, 60.1, 60.2) is a deburring cutterhead (60, 60.1, 60.2) which is equipped with multiple bar-type cutter inserts (61).

5. The method according to any one of claims 1 to 4, **characterized in that**, in the scope of the first pass, cutting edges of the deburring tool (60, 60.1, 60.2) are guided from the head of the bevel gear (10) to the base of the bevel gear (10) outward through tooth gaps (14) of the bevel gear (10), to create the first chamfers (12) in the region of the tooth edges (11).

6. The method according to claim 5, **characterized in that**, in the scope of the second pass, cutting edges of the deburring tool (60, 60.1, 60.2) are guided from the head of the bevel gear (10) to the base of the bevel gear (10) outward through tooth gaps (14) of the bevel gear (10), to create the second chamfers (13) in the region of the first chamfers (12).

7. The method according to any one of claims 1 to 6, **characterized in that** a different deburring tool (60.2) is used in the second pass than in the first pass.

8. The method according to any one of claims 1 to 6, **characterized in that** the bevel gear cutting machine (200) comprises a deburring device (50) having two deburring tools (60, 60.1, 60.2), wherein the deburring device (50) carries out a rotation or pivot movement before the second pass, to use a different deburring tool in the second pass than in the first pass.

## Revendications

1. Procédé pour chanfreiner des arêtes de dents (11) d'une roue conique (10) dans une machine à tailler les engrenages à commande numérique (200), comprenant les étapes suivantes :
- utiliser un outil d'ébavurage (60, 60.1, 60.2) dans un premier passage pour produire des premiers chanfreins (12) dans la zone des arêtes de dents (11),
- utiliser un outil d'ébavurage (60, 60.1, 60.2) dans un deuxième passage pour produire des deuxièmes chanfreins (13) dans la zone des premiers chanfreins (12),
les premiers chanfreins (12) formant avec les deuxièmes chanfreins (13) des facettes doubles qui s'étendent de façon sensiblement parallèle les unes aux autres.

2. Procédé selon la revendication 1, **caractérisé en ce qu'**il s'agit aussi bien au premier passage qu'au deuxième passage d'un traitement continu, dans lequel la roue conique (10) et l'outil d'ébavurage (60, 60.1, 60.2) tournent de façon couplée, en prise l'un avec l'autre.

3. Procédé selon la revendication 1 ou 2, **caractérisé en ce que** l'outil d'ébavurage (60, 60.1, 60.2), lors du premier passage, est utilisé moins incliné par rapport à la roue conique (10) que lors du deuxième passage.

4. Procédé selon la revendication 1, 2 ou 3, **caractérisé en ce que** l'outil d'ébavurage (60, 60.1, 60.2) est une tête d'ébavurage (60, 60.1, 60.2) qui est équipée de plusieurs lames en forme de tiges (61).

5. Procédé selon l'une des revendications 1 à 4, **caractérisé en ce que**, lors du premier passage, les bords coupants de l'outil d'ébavurage (60, 60.1, 60.2) sont guidés depuis la tête de la roue conique (10) vers le pied de la roue conique (10) à travers les entredents (14) de la roue conique (10) vers l'extérieur pour produire les premiers chanfreins (12) dans la zone des arêtes de dents (11).

6. Procédé selon la revendication 5, **caractérisé en ce que**, lors du deuxième passage, les bords coupants de l'outil d'ébavurage (60, 60.1, 60.2) sont guidés depuis la tête de la roue conique (10) vers le pied de la roue conique (10) à travers les entredents (14) de la roue conique (10) vers l'extérieur pour produire les deuxièmes chanfreins (13) dans la zone des premiers chanfreins (12).

7. Procédé selon l'une des revendications 1 à 6, **caractérisé en ce que**, au deuxième passage, on utilise un autre outil d'ébavurage (60.2) qu'au premier passage.

8. Procédé selon l'une des revendications 1 à 6, **caractérisé en ce que** la machine à tailler les engrenages (200) comprend un dispositif d'ébavurage (50) avec deux outils d'ébavurage (60, 60.1, 60.2), le dispositif d'ébavurage (50) réalisant, avant le deuxième passage, un mouvement de rotation ou de pivotement pour utiliser lors du deuxième passage un autre outil d'ébavurage qu'au premier passage.
